(19) Europäisches Patentamt
European Patent Office
Office européen des brevets

(11) EP 1 290 078 B1

# (12) EUROPÄISCHE PATENTSCHRIFT

(45) Veröffentlichungstag und Bekanntmachung des Hinweises auf die Patenterteilung:
**04.08.2004 Patentblatt 2004/32**

(21) Anmeldenummer: **01943379.6**

(22) Anmeldetag: **16.05.2001**

(51) Int Cl.[7]: **C08K 5/315**, C08L 69/00

(86) Internationale Anmeldenummer:
**PCT/EP2001/005562**

(87) Internationale Veröffentlichungsnummer:
**WO 2001/092395 (06.12.2001 Gazette 2001/49)**

(54) **TRANSPARENTE THERMOPLASTISCHE ZUSAMMENSETZUNG**

TRANSPARENT THERMOPLASTISCHIC COMPOSITION

COMPOSITION THERMOPLASTIQUE TRANSPARENTE

(84) Benannte Vertragsstaaten:
**AT BE CH CY DE DK ES FI FR GB GR IE IT LI LU MC NL PT SE TR**

(30) Priorität: **29.05.2000 DE 10026628**

(43) Veröffentlichungstag der Anmeldung:
**12.03.2003 Patentblatt 2003/11**

(73) Patentinhaber: **Bayer MaterialScience AG**
**51368 Leverkusen (DE)**

(72) Erfinder:
- **GORNY, Rüdiger**
**47800 Krefeld (DE)**
- **ANDERS, Siegfried**
**51147 Köln (DE)**
- **NISING, Wolfgang**
**53757 Sankt Augustin (DE)**
- **HAESE, Wilfried**
**51519 Odenthal (DE)**

(56) Entgegenhaltungen:
**WO-A-01/16224**
**DE-A- 10 006 651**
**US-A- 5 821 380**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 290 078 B1

## Beschreibung

Die vorliegende Erfindung betrifft eine Zusammensetzung enthaltend ein transparentes thermoplastisches Polymer und Verbindungen nach Formel (I)

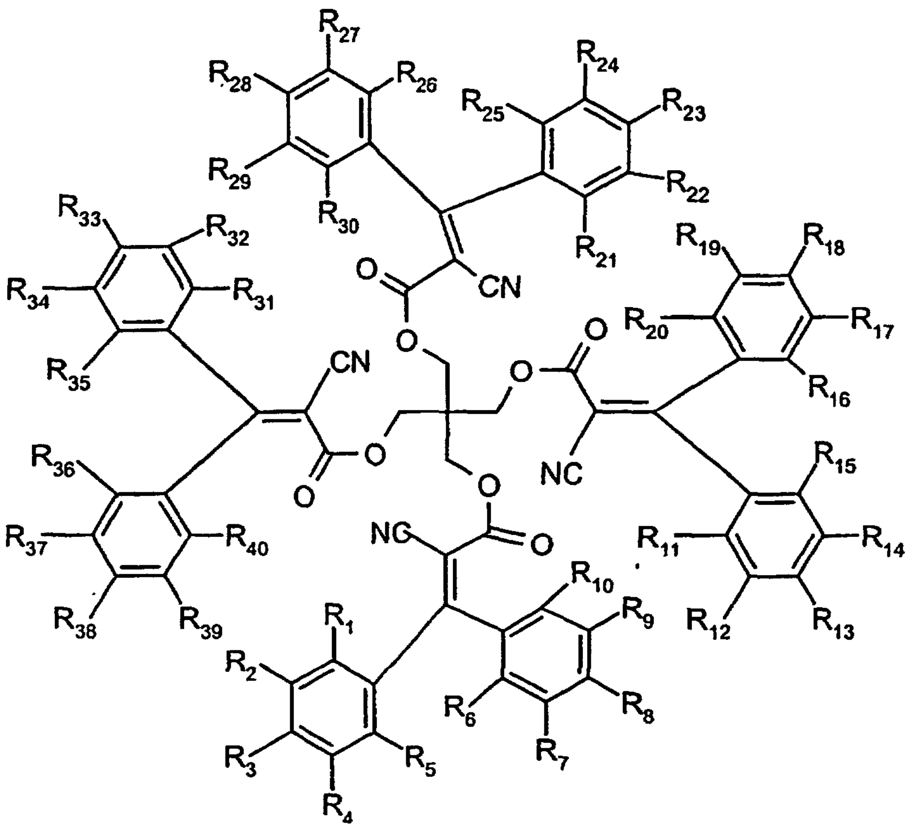

(I)

worin

$R_1$ bis $R_{40}$ gleich oder verschieden sind und ausgewählt sind aus der Gruppe bestehend aus H, Alkyl, Halogen und -CN,

sowie daraus hergestellte Erzeugnisse.

Polycarbonatplatten sind beispielsweise aus EP-A 0 110 221 bekannt und werden für eine Vielzahl von Anwendungszwecken bereitgestellt. Die Herstellung erfolgt z.B. durch Extrusion von Zusammensetzungen enthaltend Polycarbonat und gegebenenfalls Coextrusion mit Zusammensetzungen enthaltend Polycarbonat, die einen erhöhten Anteil an UV-Absorbern enthalten können.

Erzeugnisse aus Zusammensetzungen enthaltend Polycarbonat wie beispielsweise Brillengläser und Kunststoffstreuscheiben werden bevorzugt durch Spritzguss hergestellt. Automobilverscheibungen können wahlweise durch Spritzguss oder Extrusion hergestellt werden.

Wichtige Aspekte für die Auswahl von transparenten Polycarbonatplatten sind eine hohe Lichttransmission und eine geringe Trübung. Damit der UV-Anteil des Sonnenlichts nicht zu einer starken Vergilbung der Platten führt, ist das Polycarbonat normalerweise mit mindestens einem UV-Stabilisator ausgerüstet. Bei transparenten Verscheibungen führt eine erhöhte Trübung der Platte dazu, dass dahinter befindliche Gegenstände schlechter sichtbar sind. Der Trübungseffekt wird optisch umso auffälliger, je dicker die Platte ist. Eine geringe Trübung ist z.B. bei der Automobilverscheibung besonders wichtig.

DE-A 1 670 951 lehrt, dass für die Stabilisierung von Polycarbonat gegen die Vergilbung bei der Einwirkung von UV-Licht UV-Absorber, z.B. auf Basis von substituierten Benzotriazolen, Anwendung finden.

Für den Langzeitschutz gegen Vergilbung durch UV-Licht lehrt EP-A 0 320 632, dass die Polycarbonatplatten mit einer Coextrusionsschicht auszurüsten sind, die schwerflüchtige UV-Absorber, insbesondere dimere Benzotriazole wie z.B. Tinuvin® 360 (Bis[2-hydroxy-5-tert-octyl-3-(benzotriazol-2-yl)phenyl]methan), ein Produkt der Firma Ciba Spezialitätenchemie, Basel, Schweiz, in ausreichend hoher Konzentration enthalten.

WO 96/15102 beschreibt spezielle UV-Absorber, auch solche gemäß Formel (I), die als Lichtschutzmittel oder Stabilisator für organische Materialien wie z.B. Kunststoffe wirken.

WO 96/15102 lehrt, dass ein Gehalt von 0.01 bis 10 Gew-% der dort beschriebenen UV-Absorber in organischen Materialien einen UV-Schutz bewirken. Über die Güte des UV-Schutzes in Polycarbonat werden jedoch keine Aussagen getroffen. Es wird auch keine Lehre offenbart, wie Zusammensetzungen geringer Trübung erhalten werden können.

Der vorliegenden Erfindung liegt die Aufgabe zugrunde, Zusammensetzungen bereitzustellen, die gegen UV-Strahlung stabil sind und eine hohe Lichttransmission und eine geringe Trübung aufweisen. Weiterhin sollen Erzeugnisse aus diesen Zusammensetzungen bereit gestellt werden.

Die erfindungsgemäße Aufgabe wird gelöst durch Zusammensetzungen enthaltend

a) ein transparentes thermoplastisches Polymer und

b) eine oder mehrere verschiedene Verbindungen gemäß Formel (I)

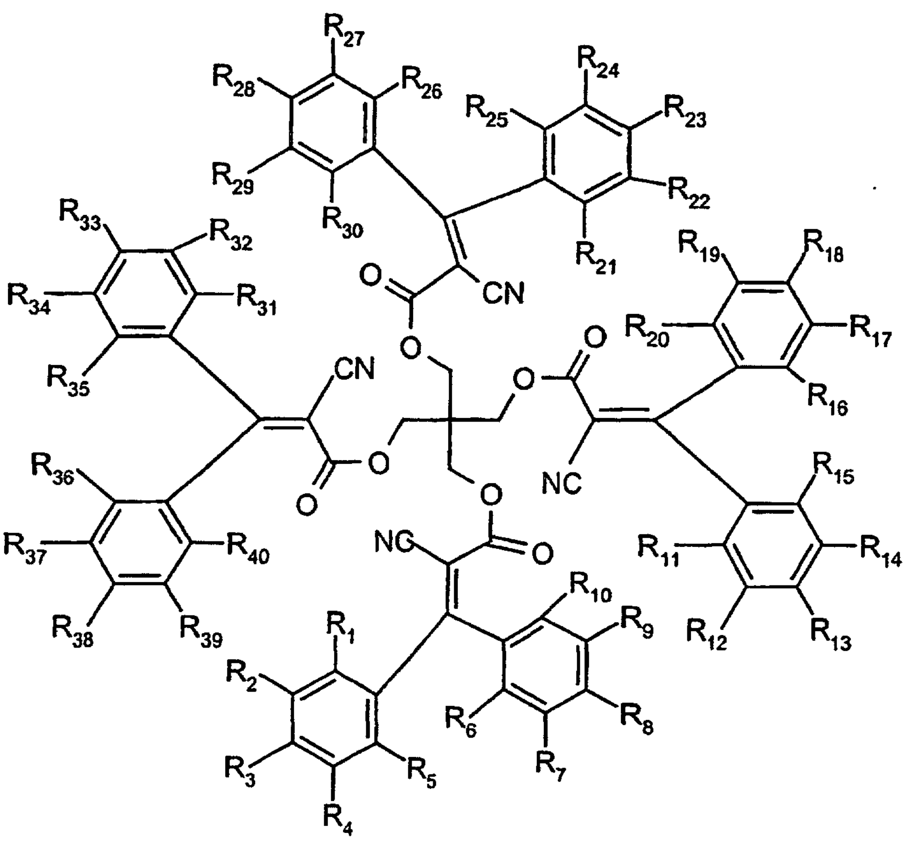

(I),

worin

$R_1$ bis $R_{40}$ gleich oder verschieden sind und ausgewählt sind aus der Gruppe bestehend aus H, Alkyl, Halogen und -CN,

sowie daraus hergestellte Erzeugnisse.

Die erfindungsgemäße Zusammensetzung enthält bevorzugt 0,08 bis 0,6 Gew.-%, besonders bevorzugt 0,1 bis 0,3 Gew.-%, der Verbindungen gemäß Formel (I).

Bevorzugt ist $R_1$ bis $R_{40}$ gleich H (Wasserstoff).

Das erfindungsgemäße transparente thermoplastische Polymer ist bevorzugt ausgewählt aus der Gruppe bestehend aus Polycarbonat, Polymethylmethacrylat, Polyethylmethacrylat, Polystyrol, Polysulfon, Styrolacrylnitrilcopolymerisat, Polyester, Polyethylenterephthalat, Polybutylenterephthalat, Copolyester von Polyethylenterephthalat mit Cyclohexandimethanol, Copolyester von Polybutylenterephthalat mit Cyclohexandimethanol, Polyethersulfon, Polyethylen, Polypropylen und Mischungen aus den genannten Polymeren, wobei diejenigen Polymere und Mischungen bevorzugt sind, die sich zu hochtransparenten, glasklaren Erzeugnissen verarbeiten lassen.

Ganz besonders bevorzugt ist das transparente thermoplastische Polymer Polycarbonat.

Erfindungsgemäß bevorzugte Polycarbonate sind Polycarbonate aus auf Basis von Bisphenol A, insbesondere Bisphenol A Homopolycarbonat und Copolycarbonate auf Basis von Bisphenol A und 1,1-Bis-(4-hydroxyphenyl)-3,3,5-trimethylcyclohexan.

Besonders geeignete transparente thermoplastische Polymere sind weiterhin Copolycarbonate auf Basis von Bisphenolen, Poly- oder Copolyacrylate und Poly- oder Copolymethacrylate wie z.B. Poly- oder Copolymethylmethacrylat, Copolymere mit Styrol wie z.B. transparentes Polystyrolacrylnitril (SAN), ferner transparente Cycloolefine, Poly- oder Copolykondensate der Terephthalsäure, wie z.B. Poly- oder Copolyethylenterephthalat (PET oder CoPET oder PETG).

Beispiele für Polyester bzw. Copolyester sind beschrieben in EP-A 0 678 376, EP-A 0 595 413, US-A 6 096 854.

Weiterhin enthalten die erfindungsgemäßen Zusammensetzungen bevorzugt zusätzlich 0,01 bis 1 Gew.-%, besonders bevorzugt 0,04 bis 0,7 Gew.-%, Pentaerythrittetrastearat oder Glycerinmonostearat oder Fettsäureester von Guerbetalkoholen oder deren Mischungen.

Die erfindungsgemäße Aufgabe wird außerdem gelöst durch Erzeugnisse enthaltend die Zusammensetzung gemäß den vorhergehenden Absätzen.

Bevorzugt sind Erzeugnisse, die ausgewählt sind aus der Gruppe bestehend aus Platten, Massivplatten, Stegplatten, Wellplatten, Verscheibungen, Gewächshäusern, Wintergärten, Bushaltestellen, Reklametafeln, Schildern, Schutzscheiben, Automobilverscheibungen, Fenster, Überdachungen, Kunststoffstreuscheiben und Brillengläser.

Weiterhin bevorzugt sind Erzeugnisse, die mehrschichtig sind und bei denen mindestens eine Schicht einen ausreichend hohen Gehalt eines UV-Absorbers enthält, so dass die darunterliegenden Schichten von den schädlichen Einwirkungen des UV-Lichtes geschützt sind. Dabei ist eine bevorzugte Ausführungsform der vorliegenden Erfindung dadurch gegeben, dass der UV-Absorber, der in mindestens einer Schicht enthalten ist, eine Verbindung gemäß Formel (I) ist. Weiterhin ist eine bevorzugte Ausführungsform der vorliegenden Erfindung dadurch gegeben, dass der UV-Absorber, der in mindestens einer Schicht enthalten ist, eine andere Verbindung ist.

Eine erfindungsgemäß bevorzugte Ausführungsform ist weiterhin dadurch gegeben, dass das transparente thermoplastische Polymer ein Polymerblend ist, das zu mindestens 20 Gew.-% aus Polycarbonat besteht, wobei das Polymerblend außer Polycarbonat Polyester oder Polymethacrylate oder beides als Blendpartner enthält.

Die Verbindung gemäß Formel (I) mit $R_1$ bis $R_{40}$ gleich H ist im Handel unter dem Namen Uvinul® 3030 von der BASF AG, Ludwigshafen, Deutschland, erhältlich.

Die Herstellung der Verbindung gemäß Formel (I) mit $R_1$ bis $R_{40}$ gleich H ist in WO 96/15102 beschrieben. Die Verbindungen gemäß Formel (I), in denen $R_1$ bis $R_{40}$ eine andere Bedeutung haben, können nach entsprechenden Verfahren hergestellt werden.

Da die Verbindungen gemäß Formel (I) schwer flüchtig sind, ist es möglich, diese wie in EP-A 0 320 632 beschrieben, in Zusammensetzungen enthaltend transparente thermoplastische Polymere als UV-Schutz für coextrudierte Platten einzusetzen (Einsatz in Coextrusionsformmassen).

Überraschenderweise hat sich herausgestellt, dass bei Einsatz der Verbindungen gemäß Formel (I) in Konzentrationen von 0,08 bis 0,6 Gew-%, bevorzugt 0,1 bis 0,3 Gew.-%, die Trübung und die Lichttransmission besser sind als mit den herkömmlichen Benzotriazol-UV-Absorbern.

Die erfindungsgemäßen Polycarbonate sind Homopolycarbonate, Copolycarbonate und thermoplastische Polyestercarbonate. Sie haben bevorzugt mittlere Molekulargewichte $\overline{M}_w$ von 18.000 bis 40.000 g/mol, vorzugsweise von 20.000 bis 36.000 g/mol und insbesondere von 22.000 bis 35.000 g/mol, ermittelt durch Messung der relativen Lösungsviskosität in Dichlormethan oder in Mischungen gleicher Gewichtsmengen Phenol/o-Dichlorbenzol geeicht durch Lichtstreuung.

Zur Herstellung von Polycarbonaten für die erfindungsgemäßen Zusammensetzungen sei beispielhaft auf Schnell, "Chemistry and Physics of Polycarbonats", Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die Herstellung von Polycarbonat erfolgt vorzugsweise nach dem Phasengrenzflächenverfahren oder dem Schmelze-Umesterungsverfahren und wird beispielhaft an dem Phasengrenzflächenverfahren beschrieben.

Als Ausgangsverbindungen bevorzugt einzusetzende Verbindungen sind Bisphenole der allgemeinen Formel

HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und $\alpha,\alpha,'$-Bis(hydroxyphenyl)diisopropylbenzole gehören.

Bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), 4,4-(para-Phenylendiisopropyl) diphenol, 1,1-Bis-(4-hydroxyphenyl)-3,3,5-trimethylcyclohexan (BP-TMC), 2,2-Bis-(4-hydroxyphenyl)-2-phenylethan, 1,1-Bis-(4-hydroxyphenyl)-cyclohexan (Bisphenol-Z) sowie gegebenenfalls deren Gemische.

Die erfindungsgemäß einzusetzenden Bisphenolverbindungen werden bevorzugt mit Kohlensäureverbindungen, insbesondere Phosgen oder beim Schmelzeumesterungsprozess bevorzugt mit Diphenylcarbonat oderDimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalenten erhalten. Hierfür geeignete aromatische Dicarbonsäuren sind beispielsweise Phthalsäure, Terephthalsüure, Isophthalsäure, 3,3'- oder 4,4'-Diphenyldicarbonsäure und Benzophenondicarbonsäuren. Ein Teil, bis zu 80 Mol%, vorzugsweise von 20 bis 50 Mol% der Carbonatgruppen in den Polycarbonaten können durch aromatische Dicarbonsäureester-Gruppen ersetzt sein und werden erfindungsgemäß ebenfalls als Polycarbonat bezeichnet.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden z.B. die in DE-A 4 238 123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; $\alpha,\alpha',\alpha''$-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4''-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 mol%, bezogen auf eingesetzte Bisphenole, an Verzweigern bzw. Mischungen der Verzweigern, können mit den Bisphenolen zusammen eingesetzt werden aber auch in einem späteren Stadium der Synthese zugegeben werden.

Es können Kettenabbrecher verwendet werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen in Mengen von bevorzugt 1-20 Mol-%, besonders bevorzugt 2-10 Mol-%, je Mol Bisphenol verwendet. Bevorzugt sind Phenol, 4-tert.-Butylphenol bzw. Cumylphenol.

Kettenabbrecher und Verzweiger können getrennt oder aber auch zusammen mit dem Bisphenol während der Synthese zugesetzt werden.

Die Herstellung der Polycarbonate für die erfindungsgemäßen Zusammensetzungen nach dem Schmelzeumesterungsprozess ist in DE-A 4 238 123 beispielhaft beschrieben.

Die Einarbeitung der UV-Absorber in die erfindungsgemäßen Zusammensetzungen erfolgt nach üblichen Methoden, beispielsweise durch Vermischen von Lösungen der UV-Absorber mit Lösungen der Kunststoffe in geeigneten organischen Lösungsmitteln wie $CH_2Cl_2$, Halogenalkanen, Halogenaromaten, Chlorbenzol und Xylolen. Die Substanzgemische werden dann in bekannter Weise, bevorzugt durch Extrusion, homogenisiert. Die Lösungsgemische werden in bekannter Weise durch Ausdampfen des Lösungsmittels und anschließender Extrusion entfernt, beispielsweise in Extrudem.

Die erfindungsgemäßen Zusammensetzungen können zusätzlich geeignete Entformungsmittel enthalten.

Geeignete Entformungsmittel sind z.B. die Ester aus langkettigen aliphatischen Säuren und Alkoholen. Beispielhaft seien hier Ester aus Fettsäurealkoholen oder Polyolen wie z. B. Pentaerythrit mit Fettsäuren genannt, wie sie in DE-A 33 12 158, EP-A 0 100 918, EP-A 0103 107, EP-A 0 561 629, EP-A 0 352 458, EP-A 0 436 117 beschrieben werden oder Ester aus Fettsäuren mit Guerbetalkoholen die z.B. in US-A 5 001 180, DE-A 33 12 157, US-A 5 744 626 beschrieben werden.

Die erfindungsgemäßen Zusammensetzungen können zusätzlich Stabilisatoren enthalten.

Geeignete Stabilisatoren sind beispielsweise Phosphine, Phosphite oder Epoxide oder Si enthaltende Stabilisatoren und weitere in EP-A 0 500 496 und US-A 3 673 146 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)-phosphit.

Ferner können die erfindungsgemäßen Zusammensetzungen und die daraus hergestellten Erzeugnisse organische Farbstoffe, anorganische Farbpigmente, Fluoreszenzfarbstoffe und besonders bevorzugt optische Aufheller enthalten.

Die erfindungsgemäßen Zusammensetzungen können zur Extrusion von Platten verwendet werden. Diese Platten können einseitig oder beidseitig mit Coextrusionsschichten versehen werden.

Die Coextrusion als solche ist literaturbekannt (siehe beispielsweise EP-A 0 110 221 und EP-A 0 110 238).

Geeignete UV-Absorber für die gegebenenfalls zu verwendenden Coextrusionsformmassen sind bevorzugt solche Verbindungen, die aufgrund ihres Absorptionsvermögens unterhalb von 400 nm in der Lage sind, Polycarbonat wirksam vor UV-Licht zu schützen und ein Molekulargewicht von bevorzugt mehr als 370, vorzugsweise 500 und mehr aufweisen.

Geeignete UV-Absorber sind insbesondere die in WO 99/05205 beschriebenen Verbindungen der Formel (II)

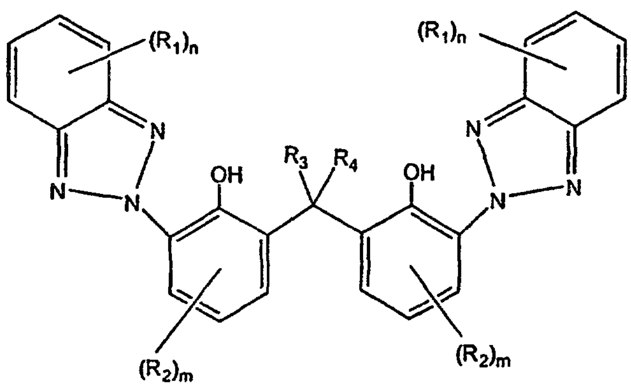

(II),

worin

| | |
|---|---|
| $R^1$ und $R^2$ | gleich oder verschieden sind und H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, -$OR^5$ oder -(CO)-O-$R^5$ bedeuten mit |
| $R^5$ = | H oder $C_1$-$C_4$-Alkyl, |
| $R^3$ und $R^4$ | ebenfalls gleich oder verschieden sind und H, $C_1$-$C_4$-Alkyl, $C_5$-$C_6$-Cycloalkyl, Benzyl oder $C_6$-$C_{14}$-Aryl bedeuten, |
| m | 1,2 oder 3 ist und |
| n | 1,2,3 oder 4 ist, |

sowie solche der Formel (III)

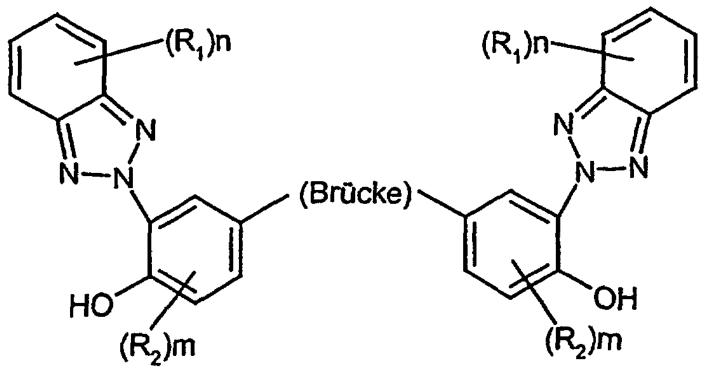

(III),

worin die Brücke

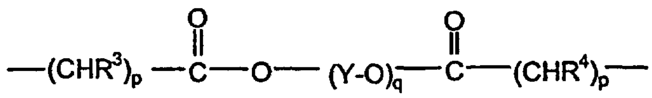

bedeutet und

| | |
|---|---|
| $R^1$, $R^2$, m und n | die für Formel (II) genannte Bedeutung haben, und worin |
| p | eine ganze Zahl von 0 bis 3 ist, |
| q | eine ganze Zahl von 1 bis 10 ist, |
| Y | $-CH_2-CH_2-$, $-(CH_2)_3-$, $-(CH_2)_4-$, $-(CH_2)_5-$, $-(CH_2)_6-$, oder $CH(CH_3)-CH_2-$ ist und |
| $R^3$ und $R^4$ | die für Formel (II) genannte Bedeutung haben. |

Weitere geeignete UV-Absorber sind solche, die substituierte Triazine darstellen, wie das 2,4-Bis(2,4-dimethylphenyl)-6-(2-hydroxy-4-n-octyloxyphenyl)-1,3,5-triazin (CYASORB® UV-1164) oder 2-(4,6-Diphenyl-1,3,5-triazin-2-yl)-5-(hexyl)oxy-Phenol (Tinuvin® 1577). Besonders bevorzugt als UV-Absorber ist 2,2-Methylenbis-(4-(1,1,3,3-tetramethylbutyl)-6-(2H-benztriazol-2-yl)phenol), das im Handel unter der Bezeichnung Tinuvin® 360 oder Adeka Stab® LA 31 vertrieben wird. Geeignet sind außerdem die in EP-A 0 500 496 genannten UV-Absorber. Der in WO 96/15102, Beispiel 1 erhaltene UV-Absorber Uvinul® 3030 der BASF AG (Formel (I) mit $R_1$ bis $R_{40}$ = H) kann auch verwendet werden.

Die erfindungsgemäßen Zusammensetzungen können zusätzlich Antistatika enthalten.

Beispiele für Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Alle für die Synthese der erfindungsgemäßen Zusammensetzungen verwandten Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in die erfindungsgemäßen Zusammensetzungen erfolgt bevorzugt in bekannter Weise durch Vermischen von Polymergranulat mit den Additiven und anschließende Extrusion oder durch Vermischen der Lösungen von Polycarbonat mit Lösungen der Additive und anschließende Verdampfung der Lösungsmittel in bekannter Weise.

Der Anteil der Additive kann in weiten Grenzen variiert werden und richtet sich nach den gewünschten Eigenschaften der Zusammensetzungen.

Der Gesamtanteil der Additive in der Zusammensetzung beträgt bevorzugt 0,01 bis 20 Gew.%, vorzugsweise 0,05 bis 5 Gew%, besonders bevorzugt 0,1 bis 1,5 Gew.%, bezogen auf das Gewicht der Zusammensetzung.

Die so erhaltenen Zusammensetzungen können nach den üblichen Methoden, wie z.B. Heißpressen, Spinnen, Extrudieren oder Spritzgießen, in geformte Gegenstände (Erzeugnisse) überführt werden, wie z.B. Spielzeugteile, aber auch Fasern, Folien, Bändchen, Massivplatten, Stegplatten, Wellplatten, Gefäße, Rohre und sonstige Profile. Die Zusammensetzungen können auch zu Gießfolien verarbeitet werden.

Die Erfindung betrifft daher weiterhin die Verwendung der erfindungsgemäßen Zusammensetzungen zur Herstellung eines geformten Gegenstandes (Erzeugnisse). Von Interesse ist auch die Verwendung von Mehrschichtsystemen.

Gegenstand der Erfindung sind ferner Erzeugnisse, die unter Mitverwendung der erfindungsgemäßen Zusammensetzungen hergestellt worden sind. Die erfindungsgemäßen Zusammensetzungen können zur Erzeugung von massiven Kunststoffplatten und Stegplatten (z.B. Stegdoppelplatten, Stegdreifachplatten, usw.) eingesetzt werden. Die Platten umfassen auch solche, die auf einer Seite oder beiden Seiten eine zusätzliche Deckschicht mit einem erhöhten UV-Absorbergehalt aufweisen.

Die erfindungsgemäßen Zusammensetzungen erlauben die Herstellung von Erzeugnissen mit verbesserten optischen Eigenschaften, insbesondere von Platten und aus ihnen hergestellte Erzeugnisse wie z.B. Verscheibungen (Massivplatten, Stegplatten und Wellplatten) und Konstruktionsteile im Bausektor und im Automobilsektor sowie Kunststoffstreuscheiben und Brillengläser und Lampengehäuse, Lampenabdeckungen, Gehäuse für die Elektronik-Industrie, Flaschen und Folien.

Nachträgliche Bearbeitungen der mit den erfindungsgemäßen Zusammensetzungen hergestellten Erzeugnisse, wie z.B. Tiefziehen oder Oberflächenbearbeitungen, wie z.B. Ausrüstung mit Kratzfestlacken, wasserspreitenden Schichten, Bedampfungen, Besputterungen, Kaschierungen mit Folien oder Platten und ähnliches sind möglich und die durch diese Verfahren hergestellten Erzeugnisse sind ebenfalls Gegenstand des Patentes.

Die Erfindung wird durch die folgenden Beispiele weiter erläutert ohne auf diese beschränkt zu sein.

## Beispiele

Zur Herstellung der Probekörper für Versuch A bis H wurde ein Polycarbonat mit dem Handelsnamen Makrolon® 3108 (lineares Bisphenol-A Polycarbonat der Bayer AG, Leverkusen, Deutschland, mit einem Schmelzflussindex (MFR) von 6,5 g/10 min bei 300°C und 1,2 kg Belastung) bei 310°C auf einem Zweiwellenextuder mit der angegebenen Menge UV-Absorber compoundiert und anschließend granuliert. Aus diesem Granulat wurden anschließend Rechteckplatten (60 mm x 40 mm x 3 mm) durch Spritzguss hergestellt.

Die Bewitterung dieser Platten erfolgte im Weather-o-meter der Fa. Atlas, USA, mit einem 6,5 W-Xenon-Brenner bei einem Zyklus von 102 min. Belichtung und 18 min. Besprühung mit entmineralisiertem Wasser unter Belichtung. Die maximale Schwarztafeltemperatur betrug 60°C (± 5°C).

Die Lichttransmission, der Yellowness-Index und die Trübung wurden nach der Vorschrift ASTM D 1003 mit dem Gerät Haze-Gard plus der Firma BYK-Gardner GmbH, D-82538 Geretsried bestimmt.

Tabelle 1 fasst die Ergebnisse zusammen.

Tabelle 1:

| Nr. | UV-Absorber | Trübung | Transmission |
|---|---|---|---|
| A | 0.3% Tinuvin® 350 | 3.7 | 84.0 % |
| B | 0.2% Tinuvin® 350 | 1.9 | 85.4 % |
| C | 0.1% Tinuvin® 350 | 1.3 | 85.9 % |
| D | 0.8% Uvinul® 3030 | 4.2 | 83.7 % |
| E | 0.3% Uvinul® 3030 | 1.4 | 85.8 % |
| F | 0.2% Uvinul® 3030 | 1.2 | 86.0 % |
| G | 0.1% Uvinul® 3030 | 0.9 | 86.2 % |

Tabelle 1: (fortgesetzt)

| Nr. | UV-Absorber | Trübung | Transmission |
|---|---|---|---|
| H | 0.02% Uvinul® 3030 | 0.5 | 86.5 % |
| Tinuvin® 350 = 2-(2H-Benzotriazol-2-yl)-4-(1,1-dimethylethyl)-6-(2-methylpropyl)-phenol<br>Uvinul® 3030 = Formel (I) mit $R_1$ bis $R_{40}$ gleich H. | | | |

Das Ergebnis zeigt, dass die mit Uvinul® 3030 ausgerüsteten Spritzgussplättchen geringere Trübungswerte und bessere Lichttransmissionswerte aufweisen als die mit Tinuvin® 350 ausgerüsteten Spritzgussplättchen. Dies gilt mindestens im Konzentrationsbereich von 0,1 bis 0,3 Gew.-%.

Bei zu hohen Konzentrationen von Uvinul® 3030 (0,8 %) wird die Trübung zu groß. Polycarbonat-Platten mit einer derartig hohen Trübung sind nicht mehr brauchbar.

Tabelle 2:

| Entwicklung des Yellowness-Index und der Trübung bei der künstlichen Bewitterung (Xe-WOM). (Zyklen: 102 min. Bestrahlung; 18 min. Bestrahlung + Beregnung.) | | | |
|---|---|---|---|
| | **Yellowness-Index** | | |
| **Nr.** | 0 h | 5000 h | 8000 h |
| **B** | 4,9 | 17,3 | 22,4 |
| **F** | 4,9 | 16,4 | 21,5 |
| **H** | 4,1 | 21,4 | 29,3 |

Das Ergebnis zeigt, dass B und F im Bewitterungsverhalten sehr ähnlich sind. H fällt aufgrund der übermäßig starken Vergilbung auf. Derartige Polycarbonat-Platten sind als Verscheibung nicht geeignet. Die Konzentration von 0,02 Gew.-% Uvinul® 3030 ist zu gering für eine ausreichende UV-Stabilisierung.

## Patentansprüche

**1.** Zusammensetzung enthaltend

a) ein transparentes thermoplastisches Polymer und

b) 0,1 bis 0,3 Gew.-% einer oder mehrerer verschiedener Verbindungen gemäß Formel (I)

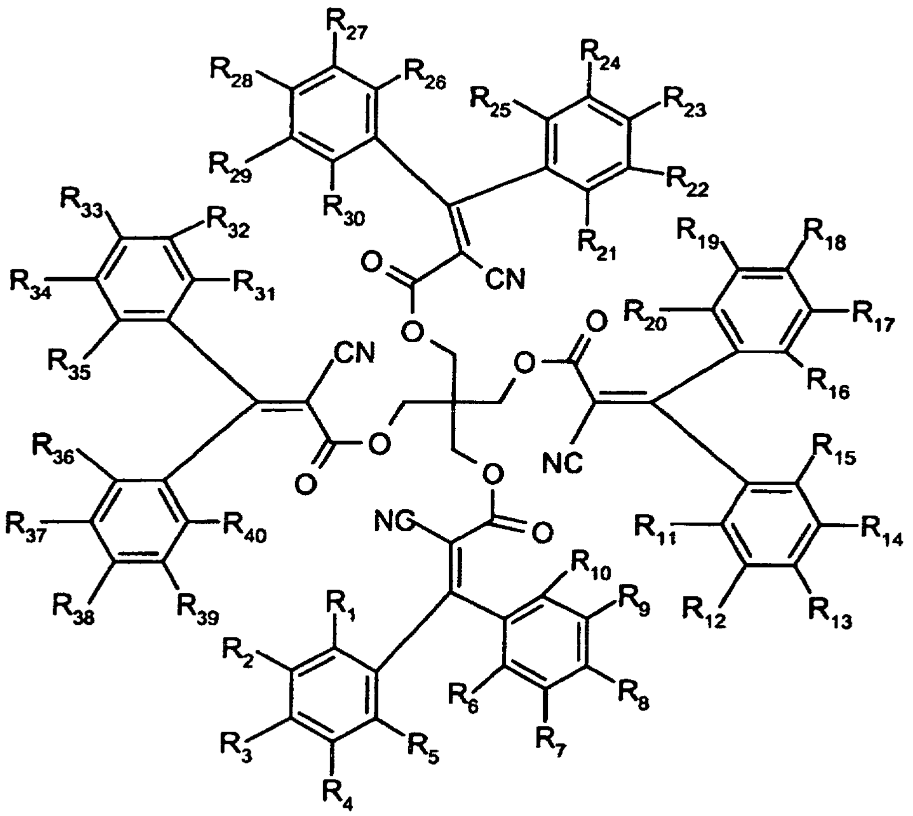

(I),

worin

$R_1$ bis $R_{40}$ gleich oder verschieden sind und ausgewählt sind aus der Gruppe bestehend aus H, Alkyl, Halogen und -CN,
wobei die Zusammensetzung zusätzlich 0,01 bis 1 Gew.-% Pentaerythrittetrastearat oder Glycerinmonostearat oder Fettsäureester von Guerbetalkoholen oder deren Mischungen enthält.

**2.** Zusammensetzung nach Anspruch 1, wobei $R_1$ bis $R_{40}$ gleich H ist.

**3.** Zusammensetzung nach einem der Ansprüche 1 oder 2, wobei das transparente thermoplastische Polymer ausgewählt ist aus der Gruppe bestehend aus Polycarbonat, Polymethylmethacrylat, Polyethylmethacrylat, Polystyrol, Polysulfon, Styrolacrylnitrilcopolymerisat, Polyester, Polyethylenterephthalat, Polybutylenterephthalat, Copolyester von Polyethylenterephthalat mit Cyclohexandimethanol, Copolyester von Polybutylenterephthalat mit Cyclohexandimethanol, Polyethersulfon, Polyethylen, Polypropylen und Mischungen aus den genannten Polymeren.

**4.** Zusammensetzung nach einem der Ansprüche 1 bis 3, wobei das transparente thermoplastische Polymer Polycarbonat ist.

**5.** Erzeugnis enthaltend die Zusammensetzung gemäß einem der Ansprüche 1 bis 4.

**6.** Erzeugnis nach Anspruch 5, wobei das Erzeugnis ausgewählt ist aus der Gruppe bestehend aus Platten, Massivplatten, Stegplatten, Wellplatten, Verscheibungen, Gewächshäusern, Wintergärten, Bushaltestellen, Reklametafeln, Schildern, Schutzscheiben, Automobilverscheibungen, Fenster, Überdachungen, Kunststoffstreuscheiben und Brillengläser.

**7.** Erzeugnis nach Anspruch 5 oder 6, wobei das Erzeugnis mehrschichtig ist und wobei mindestens eine Schicht einen ausreichend hohen Gehalt eines UV-Absorbers enthält, so dass die darunterliegenden Schichten von den schädlichen Einwirkungen des UV-Lichtes geschützt sind.

8. Erzeugnis nach Anspruch 7, wobei die Schicht mit dem erhöhten UV-Absorberanteil durch Coextrusion aufgebracht wird.

9. Erzeugnis nach Anspruch 7, wobei die Schicht mit dem erhöhten UV-Absorberteil durch Lackierung aufgebracht wird.

**Claims**

1. Composition containing

a) a transparent thermoplastic polymer and

b) 0.1 to 0.3 wt.% of one or more different compounds according to formula (I)

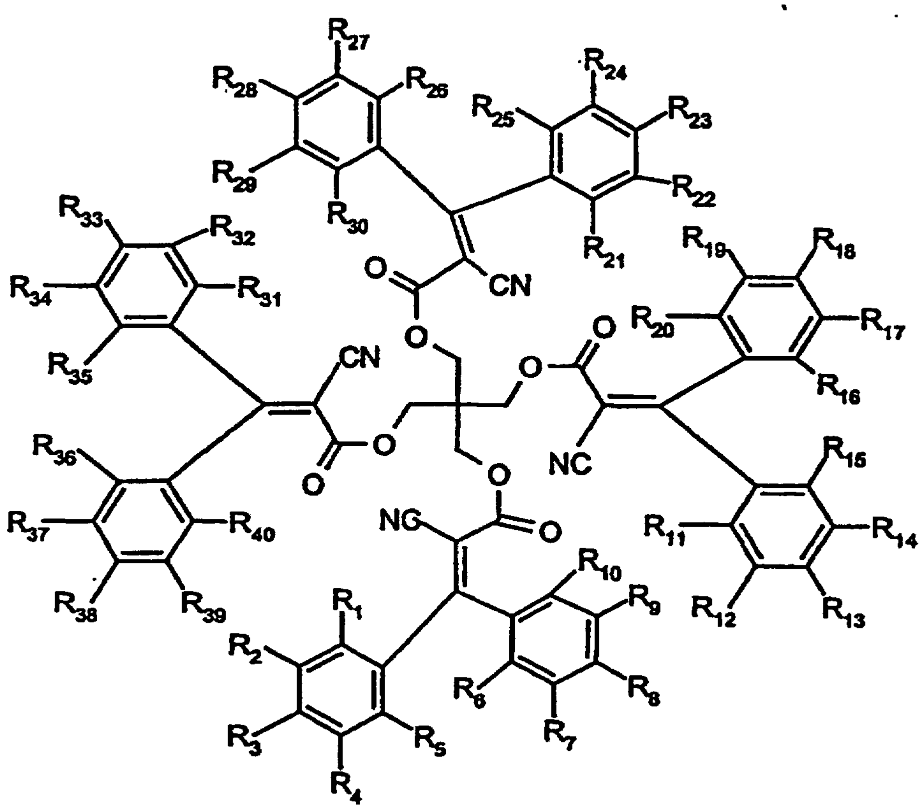

(I)

wherein

$R_1$ to $R_{40}$ are the same or different and are selected from the group consisting ofH, alkyl, halogen and -CN, the composition additionally containing 0.01 to 1 wt.% of pentaerythritol tetrastearate or glycerol monostearate or fatty acid esters of Guerbet alcohols or mixtures thereof.

2. Composition according to claim 1, wherein $R_1$ to $R_{40}$ are equal to H.

3. Composition according to one of claims 1 or 2, wherein the transparent thermoplastic polymer is selected from the group consisting of polycarbonate, polymethyl methacrylate, polyethyl methacrylate, polystyrene, polysulfone, styrene-acrylonitrile copolymer, polyester, polyethylene terephthalate, polybutylene terephthalate, copolyesters of polyethylene terephthalate with cyclohexanedimethanol, copolyesters ofpolybutylene terephthalate with cyclohexanedimethanol, polyether sulfone, polyethylene, polypropylene and mixtures of the above polymers.

4. Composition according to one of claims 1 to 3, wherein the transparent thermoplastic polymer is polycarbonate.

5. Product containing the composition according to one of claims 1 to 4.

6. Product according to claim 5, wherein the product is selected from the group consisting of sheets, solid sheets, multi wall sheets, corrugated sheets, glazing panels, greenhouses, conservatories, bus shelters, advertising panels, signs, safety screens, automobile glazing, windows, roofing, plastic headlight lenses and spectacle lenses.

7. Product according to claim 5 or 6, wherein the product is multi-layer and wherein at least one layer contains a sufficiently high content of a UV absorber that the layers below it are protected from the harmful effects of UV light.

8. Product according to claim 7, wherein the layer with the increased proportion of UV absorber is applied by co-extrusion.

9. Product according to claim 7, wherein the layer with the increased proportion of UV absorber is applied by painting.

## Revendications

1. Composition contenant

a) un polymère thermoplastique transparent et
b) 0,1 à 0,3 % en poids d'un ou plusieurs composés différents selon la formule (I)

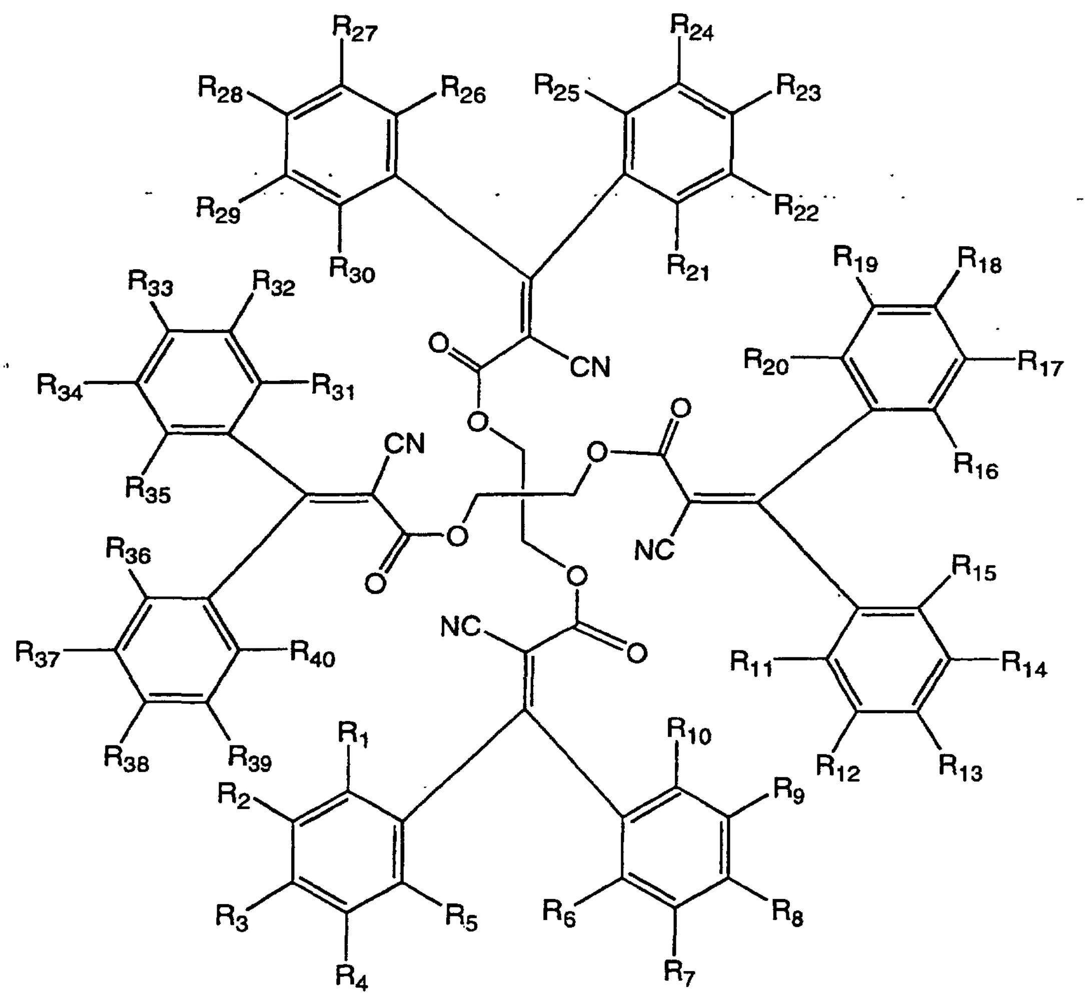

(I),

dans laquelle

$R_1$ à $R_{40}$ sont identiques ou différents et sont choisis dans le groupe constitué par H, un radical alkyle, un halogène et -CN,
où la composition contient en outre 0,01 à 1 % en poids de tétrastéarate de pentaérythritol ou de monostéarate de glycérine ou un ester d'acide gras d'alcools de Guerbet ou leurs mélanges.

**2.** Composition selon la revendication 1, dans laquelle $R_1$ à $R_{40}$ sont identiques à H.

**3.** Composition selon l'une des revendications 1 ou 2, où le polymère thermoplastique transparent est choisi dans le groupe constitué par le polycarbonate, le polyméthacrylate de méthyle, le polyméthacrylate d'éthyle, le polystyrène, la polysulfone, le copolymère styrène-acrylonitrile, le polyester, le polytéréphtalate d'éthylène, le polytéréphtalate de butylène, le copolyester de polytéréphtalate d'éthylène avec le cyclohexanediméthanol, le copolyester de polytéréphtalate de butylène avec le cyclohexanediméthanol, la polyéthersulfone, le polyéthylène, le polypropylène et des mélanges desdits polymères.

**4.** Composition selon l'une des revendications 1 à 3, dans laquelle le polyester thermoplastique transparent est le polycarbonate.

**5.** Produit contenant la composition selon l'une des revendications 1 à 4.

**6.** Produit selon la revendication 5, dans lequel le produit est choisi dans le groupe constitué par des plaques, des plaques compactes, des plaques à nervures, des plaques ondulées, des toits coulissants, des serres, des jardins d'hiver, des arrêts de bus, des panneaux d'affichage, des enseignes, des pare-brise, des toits coulissants pour automobiles, des fenêtres, des couvertures de toits, des verres diffusants en matière plastique et des verres de lunettes.

**7.** Produit selon la revendication 5 ou 6, dans lequel le produit est mùlticouche et dans lequel au moins une couche contient une quantité suffisamment élevée d'un absorbeur d'UV pour que les couches inférieures soient protégées de l'action dommageable de la lumière UV.

**8.** Produit selon la revendication 7, dans lequel on amène par coextrusion la couche avec la quantité élevée d'absorbant d'UV.

**9.** Produit selon la revendication 7, dans lequel on amène par enduction la couche avec la quantité élevée d'absorbant d'UV.